**Europäisches Patentamt**

**European Patent Office**

**Office européen des brevets**

(19)

(11) Veröffentlichungsnummer: **0 242 681**
**B1**

(12) **EUROPÄISCHE PATENTSCHRIFT**

(45) Veröffentlichungstag der Patentschrift:
08.11.89

(51) Int. Cl.⁴: **B62D 35/00**

(21) Anmeldenummer: **87105027.4**

(22) Anmeldetag: **04.04.87**

(54) Vorrichtung zum Leiten der Windströmung an Fahrzeugen.

(30) Priorität: **19.04.86 DE 3613319**

(43) Veröffentlichungstag der Anmeldung:
**28.10.87 Patentblatt 87/44**

(45) Bekanntmachung des Hinweises auf die Patenterteilung:
**08.11.89 Patentblatt 89/45**

(84) Benannte Vertragsstaaten:
**DE FR GB IT**

(56) Entgegenhaltungen:
EP-A- 0 153 743
DE-A- 2 649 953
DE-A- 2 806 917
DE-A- 2 851 639
DE-A- 3 512 378

(73) Patentinhaber: **Webasto AG Fahrzeugtechnik,
Kraillingerstrasse 5, D-8035 Stockdorf(DE)**

(72) Erfinder: **Schleicher, Bernd, Prinzenstrasse 47, 8
München 19(DE)**
Erfinder: **Meiler, Klaus, Am Schorn 8, D-8132 Tutzing(DE)**
Erfinder: **Hausrath, Udo, Dorfstrasse 39,
D-8139 Hadorf(DE)**
Erfinder: **Scheidl, Karl, Hessstrasse 71, 8
München 40(DE)**
Erfinder: **Specht, Martin, im Harl 4, D-8133 Feldafing(DE)**
Erfinder: **Köb, Manfred, Boschetsriederstrasse 138,
D-8 München 70(DE)**
Erfinder: **Diez, Martin, Steinbichlweg 1,
D-8214 Bernau(DE)**

## Beschreibung

Die Erfindung bezieht sich auf eine Vorrichtung zum Leiten der Windströmung an Fahrzeugen, insbesondere Heckspoiler, mit einem Luftleitprofil, das gegenüber der Fahrzeugkarosserie zwischen einer eingefahrenen Stellung und einer ausgefahrenen Stellung verstellbar ist, in welcher das Luftleitprofil als Ganzes in Abstand von der Fahrzeugkarosserie steht und gegenüber seiner Ausrichtung in eingefahrener Stellung geneigt ist.

Bei einer bekannten Vorrichtung dieser Art (Fig. 4 der DE-OS 28 51 639) ist das Luftleitprofil von Gelenkhebelanordnungen getragen, die im Bereich des vorderen Endes und im Bereich des hinteren Endes des Luftleitprofils angelenkt sind und die über dort nicht näher erläuterte Antriebsmittel wahlweise zusammengeklappt oder aufgeklappt werden können. Die bekannte Vorrichtung ist vielteilig und mit mindestens sechs Gelenken versehen. Eine zusätzliche Komplikation ist, daß die Verstellbewegung der am vorderen Ende des Luftleitprofils angreifenden Gelenkhebelanordnung mit der Verstellbewegung der mit dem hinteren Ende des Luftleitprofils zusammenwirkenden Gelenkhebelanordnung synchronisiert werden muß. Die bekannte Vorrichtung ist aufwendig und störanfällig. Auf Grund der vielen Gelenke kann es außerdem zu erheblichem Lagerspiel kommen.

Einen robusteren Aufbau haben bekannte Vorrichtungen, bei denen das verstellbare Luftleitprofil an der Fahrzeugkarosserie scharnierartig angelenkt (Fig. 3 der DE-OS 28 51 639, DE-OS 23 00 583, EP-OS 0 153 743 und JP-OS 60-92993) oder über Parallelführungen parallel zu seiner Ausgangslage verstellbar (DE-OS 26 49 953) ist. Eine solche scharnierartige Anlenkung oder Parallelverstellung schließt jedoch häufig, insbesondere im Falle von Heckspoilern, eine aerodynamisch günstige Lage des ausgestellten Luftleitprofils aus. Die Wirksamkeit des Luftleitprofils läßt infolgedessen sehr zu wünschen übrig.

Der im Patentanspruch 1 angegebenen Erfindung liegt die Aufgabe zugrunde, eine Vorrichtung mit verstellbarem Luftleitprofil zu schaffen, die aerodynamisch günstiger als Vorrichtungen mit an der Karosserie scharnierartig angelenktem oder parallel verstellbarem Luftleitprofil ist, die aber gleichwohl mit relativ geringem Aufwand aus wenigen bewegten Teilen aufgebaut werden kann und die zu einer günstigen Verteilung der einwirkenden Kräfte und Momente führt.

Diese Aufgabe wird erfindungsgemäß dadurch gelöst, daß das Luftleitprofil von mindestens einem mit ihm starr verbundenen kreisbogenförmigen Aussteller getragen ist, der in einem entsprechend kreisbogenförmigen Führungskanal eines mit Bezug auf die Karosserie feststehend angeordneten Führungsblockes verschiebbar geführt ist.

Die Erfindung beruht auf der Erkenntnis, daß ein Übergang des Luftleitprofils von der eingefahrenen Stellung in eine gewünschte, strömungstechnisch günstige ausgefahrene Stellung durch eine Drehbewegung des Luftleitprofils um einen aus den beiden Endpositionen des Luftleitprofils konstruierten (gedachten) Drehpol realisiert werden kann, der dem Krümmungsmittelpunkt des Führungskanal und des Ausstellers entspricht und der bei der erfindungsgemäßen Lösung an beliebiger, durch die strömungstechnischen Gegebenheiten bestimmter Stelle liegen kann. Die Vorrichtung nach der Erfindung kommt mit wenigen bewegten Bauteilen aus. Es wird auf besonders einfache Weise für eine definierte Ausstellbewegung gesorgt. Das Lagerspiel läßt sich leicht klein halten. Die Kräfte- und Momentenverteilung sind günstig.

Es ist zwar bekannt (DE-PS 28 06 917), bei einer Ausstellvorrichtung für ein Schwenkfenster eines Fahrzeuges einen kreisbogenförmigen Aussteller vorzusehen, der in einem entsprechend kreisbogenförmigen Führungskanal eines an der Karosserie befestigten Führungsblockes verschiebbar geführt ist. Dabei ist aber das Schwenkfenster an dem vom Aussteller abliegenden Ende mit der Fahrzeugkarosserie über Scharniere verbunden, welche die Schwenkachse für das Fenster bestimmen, und der Aussteller ist an dem Schwenkfenster angelenkt.

Der Aussteller kann zweckmäßig mit einem drucksteifen Antriebskabel in Antriebsverbindung stehen, das über mindestens einen Teil seiner Längsabmessung in einem Führungsrohr verlegt sein kann. Dabei ist vorteilhaft das mit dem Aussteller in Antriebsverbindung stehende Ende das Antriebskabels in einer in dem Führungsblock ausgebildeten kreisbogenförmigen Führungsbahn verschiebbar geführt, deren Krümmungsmittelpunkt mit dem Krümmungsmittelpunkt des Ausstellers und des Führungskanals zusammenfällt. Die Gleitbewegung zwischen dem Aussteller und dem Führungsblock erfolgt besonders leichtgängig, wenn der Führungskanal von Stegen des Führungsblockes begrenzt ist. Dadurch wird die Reibung zwischen Füh rungsblock und Aussteller klein gehalten. Der Führungsblock kann in fertigungs- und montagetechnisch besonders günstiger Weise von zwei Halbschalen gebildet sein.

An der dem Luftleitprofil zugewendeten Austrittsstelle des Ausstellers aus dem Führungsblock ist zweckmäßig eine Ringdichtung angeordnet, die das Eindringen von Regen- und Waschwasser verhindert. Eine besonders wirkungsvolle Abdichtung wird dabei erzielt, wenn die von dem Aussteller durchsetzte Öffnung der Ringdichtung in Axialrichtung im wesentlichen eine Fortsetzung des kreisbogenförmigen Führungskanals bildet. Der Aussteller kann rohrförmig ausgebildet sein. Dadurch läßt sich ein sehr stabiler Aufbau bei verhältnismäßig geringem Gewicht erzielen.

In weiterer Ausgestaltung der Erfindung ist das Luftleitprofil mit dem Aussteller über eine an der Unterseite des Luftleitprofils anliegende Anschraubplatte verbunden, die einen Ansatz trägt, der in das dem Luftleitprofil zugewendete Ende des Ausstellers hineinragt und dort mittels einer Feststellschraube gehalten ist, die in den Aussteller an einer bei eingefahrenem Luftleitprofil innerhalb des Führungskanals verschwindenden Stelle eingeschraubt ist. Dadurch wird erreicht, daß bei eingefahrenem Luftleitprofil dessen Befestigungselemente unzugänglich sind. Einem Diebstahl des Luftleitprofils ist wirkungsvoll vorgebeugt. Vorzugsweise liegt ein einem solchen Fall das äußere Ende der eingeschraubten Feststellschraube bündig oder nahezu bündig mit der Außenfläche des Ausstellers. Auf diese Weise wird in unbeabsichtigtes Lockern der Feststellschraube sofort daran kenntlich, daß das Luftleitprofil nicht mehr in die eingefahrene Stellung gebracht werden kann. Dies trägt zu erhöhter Sicherheit bei.

Als Antriebskabel kann ein Gewindekabel vorgesehen sein, das mit einem Antriebsritzel einer Antriebseinheit kämmt. Im Interesse einer erhöhten Dauerbelastbarkeit ist das Antriebskabel aber vorzugsweise als Drahtseil ausgebildet, dessen von dem Aussteller abliegendes Ende mit einer Zahnstange verbunden ist, die ihrerseits mit dem Antriebsritzel der Antriebseinheit kämmt. Die Antriebseinheit weist zweckmäßig einen Elektromotor auf, der über ein in einem Getriebegehäuse untergebrachtes Untersetzungsgetriebe das Antriebsritzel antreibt. Bei Verwendung eines Antriebskabels in Form eines Drahtseils mit angekoppelter Zahnstange ist diese Zahnstange vorteilhaft in einem Führungskanal des Getriebegehäuses verschiebbar geführt, und die Zahnstange kann zusammen mit dem Getriebegehäuse Anschläge zur Begrenzung der Verstellbewegung des Luftleitprofils bilden, wodurch die Übertragung von Anschlagkräften auf das Antriebskabel vermieden wird. Miteinander zusammenwirkende Anschläge können statt dessen oder zusätzlich auch an dem Aussteller und dem Führungsblock vorgesehen sein. Sie verhindern ein unbeabsichtigtes Herausziehen des Ausstellers aus dem Führungsblock.

Zweckmäßig ist mindestens ein in Abhängigkeit von der Verstellbewegung des Luftleitprofils betätigter Endschalter zur Erzeugung eines Signals vorgesehen, das erkennen läßt, ob sich das Luftleitprofil in einer seiner Endstellungen, d. h. der eingefahrenen oder der ausgefahrenen Stellung, oder in einer Zwischenstellung befindet. Anhand eines solchen Signals kann insbesondere ein Antriebsmotor ausgeschaltet werden, wenn das Luftleitprofil die eine oder die andere Endposition erreicht hat. Der Endschalter kann an dem Führungsblock montiert sein und mit seinem Taster in den Führungskanal für den Aussteller hineinragen, während der Aussteller in dem dem Taster zugewendeten Bereich an Stellen, die den Endstellungen des Luftleitprofils entsprechen, mit Vertiefungen oder Ausnehmungen versehen ist, in welche der Taster einfallen kann. Vorzugsweise ist der mindestens eine Endschalter aber geschützt in dem Getriebegehäuse untergebracht, wobei der Taster des Endschalters in den Führungskanal für die Zahnstange hineinragt und in den den Endstellungen des Luftleitprofils entsprechenden Stellungen der Zahnstange in eine Ausnehmung der Zahnstange einfällt.

Im Interesse erhöhter Stabilität ist das Luftleitprofil vorzugsweise auf mindestens zwei parallel ausgerichteten Ausstellern abgestützt, die jeweils in einem eigenen Führungsblock geführt sind. Die Führungsblöcke sind dabei vorteilhaft an einer gemeinsamen Grundplatte befestigt. Vorzugsweise ist eine dem gemeinsamen Antrieb zweier Aussteller dienende Antriebseinheit vorgesehen, die gleichfalls an der Grundplatte angebracht sein kann. Um das Luftleitprofil auch bei einem Ausfall des Antriebsmotors, beispielsweise wegen mangelnder Bordspannung, verstellen zu können, ist vorzugsweise der Antriebseinheit eine Notbetätigungseinrichtung zum Verstellen des Luftleitprofils von Hand unter Abkopplung des Elektromotors und des Untersetzungsgetriebes zugeordnet. Eine besonders einfache und robuste Anordnung wird dabei erhalten, wenn das Untersetzungsgetriebe eine von Hand drehbare und axial verschiebbare Abtriebswelle aufweist, die mit dem Antriebsritzel für die Antriebskabel in ständiger Antriebsverbindung steht und die durch Axialverschiebung wahlweise in oder außer Eingriff mit der Ausgangsseite des Untersetzungsgetriebes gebracht werden kann.

Zwei Ausführungsbeispiele der Erfindung sind im folgenden unter Bezugnahme auf die Zeichnungen beschrieben. Es zeigen:

Fig. 1 eine perspektivische Teilansicht eines Kraftfahrzeugs, das mit einer als Heckspoiler dienenden Vorrichtung nach der Erfindung ausgestattet ist,

Fig. 2 eine auseinandergezogene perspektivische Darstellung des verstellbaren Heckspoilers gemäß Fig. 1, jedoch ohne Luftleitprofil,

Fig. 3 eine teilweise aufgebrochene und teilweise geschnittene Teilansicht der Vorrichtung gemäß Fig. 1, von hinten gesehen, bei in ausgefahrener Stellung befindlichem Luftleitprofil,

Fig. 4 einen Schnitt entlang der Linie IV-IV der Fig. 3, wobei das Luftleitprofil mit ausgezogenen Linien in eingefahrener Stellung und mit strichpunktierten Linien schematisch in ausgefahrener Stellung veranschaulicht ist,

Fig. 5 eine perspektivische Darstellung einer abgewandelten Ausführungsform der Vorrichtung nach der Erfindung unter Weglassung des Luftleitprofils, sowie

Fig. 6 und 7 auseinandergezogene perspektivische Teildarstellungen der Vorrichtung nach Fig. 5.

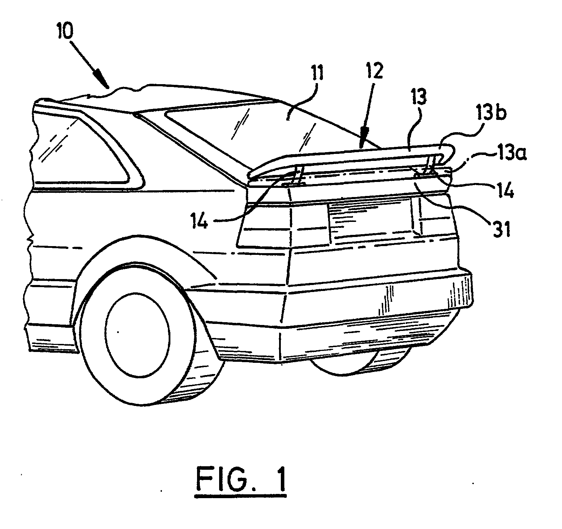

Das in Fig. 1 dargestellte Kraftfahrzeug 10 weist einen nahe dem unteren Ende der Heckscheibe 11 sitzenden, insgesamt mit 12 bezeichneten Heckspoiler 12 auf. Der Heckspoiler 12 ist mit einem Luftleitprofil 13 versehen, das nahe seinen beiden seitlichen Enden von zwei Ausstellern 14 getragen ist. Die Aussteller 14 und die zugehörigen Führungs- und Antriebsteile sind im wesentlichen gleich aufgebaut. Mittels der Aussteller 14 kann das Luftleitprofil 13 zwischen einer eingefahrenen Stellung und einer ausgefahrenen Stellung verstellt werden, die in Fig. 1 bei 13a bzw. 13b angedeutet sind.

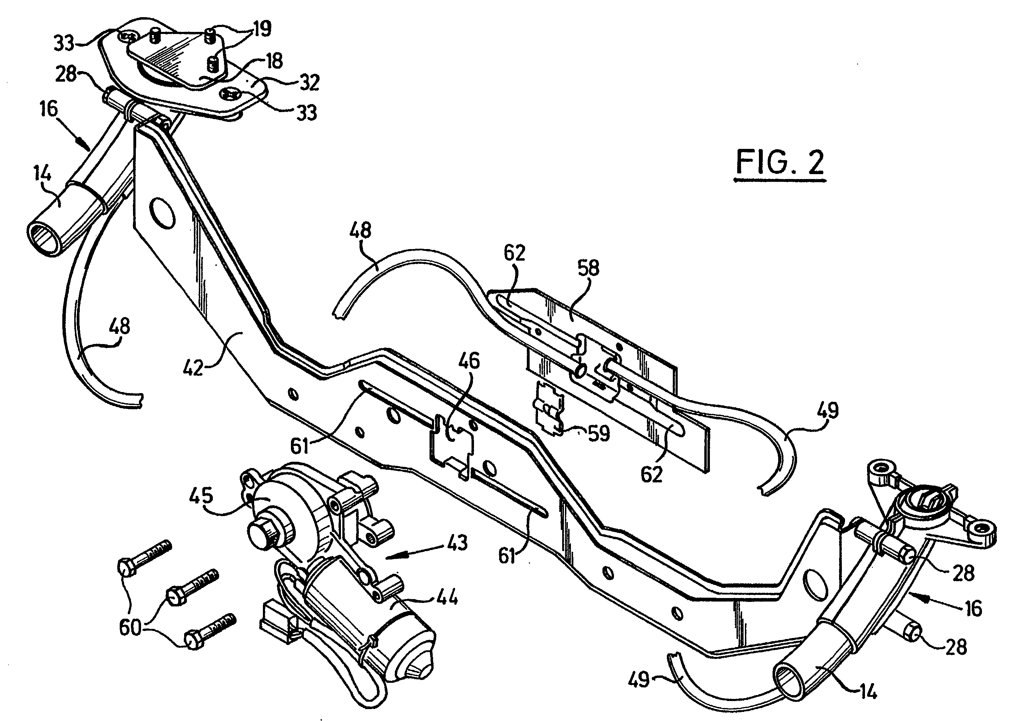

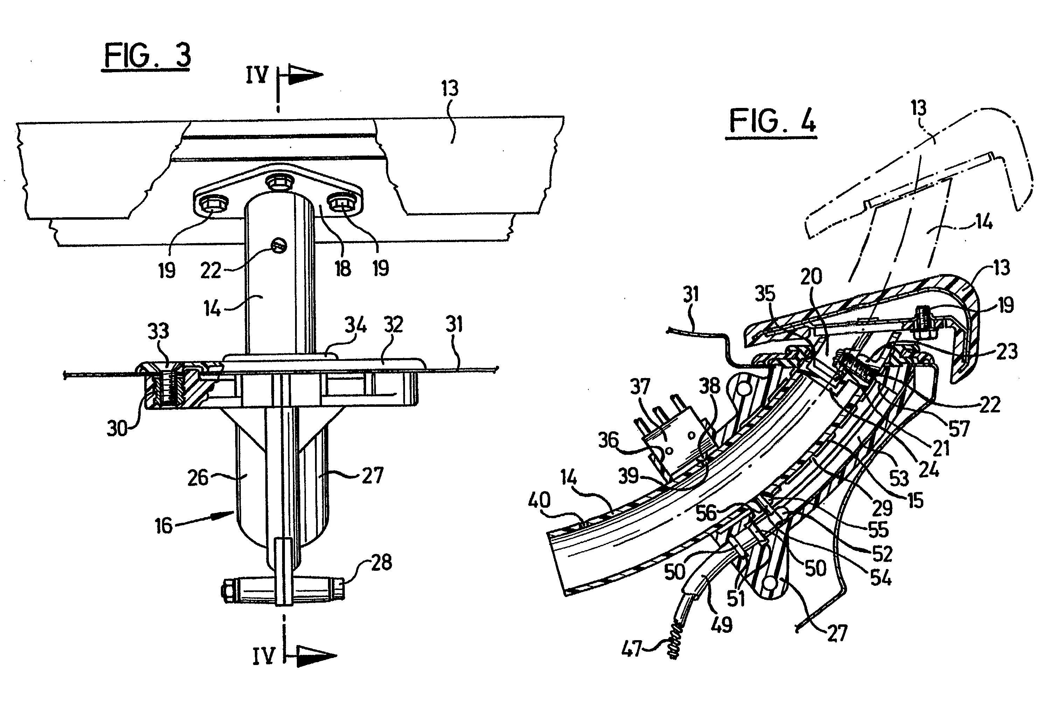

Wie aus den Fig. 2 und 4 hervorgeht, ist jeder der Aussteller 14 kreisbogenförmig gestaltet und in einem entsprechend kreisbogenförmigen Führungskanal 15 eines Führungsblockes 16 verschiebbar geführt. Die Krümmungsradien von Aussteller 14 und Führungskanal 15 stimmen überein. Der Krümmungsmittelpunkt ergibt den Drehpol, um den das Luftleitprofil 13 beim Übergang zwischen der eingefahrenen Stellung und der ausgefahrenen Stellung eine definierte Drehbewegung ausführt. Der Drehpol wird aus den gewünschten Endpositionen des Luftleitprofils 13 konstruiert.

Jeder der beiden rohrförmigen Aussteller 14 ist mit dem Luftleitprofil 13 über eine Anschraubplatte 18 verbunden, die and der Unterseite des Luftleitprofils 13 anliegt und dort mittels Schrauben 19 gehalten ist. Die Anschraubplatte 18 trägt einen schräg nach unten abstehenden Ansatz 20, der im wesentlichen einen halbkreisförmigen Querschnitt hat und mit einer Längsnut 21 versehen ist. Der Ansatz 20 ragt in das dem Luftleitprofil 13 zugewendete Ende des Ausstellers 14 hinein und ist dort mittels einer Feststellschraube 22 gehalten. Die Feststellschraube 22 ist in ein mit Innengewinde versehenes Auge 23 an der Innenseite des Ausstellers 14 eingeschraubt. Das innenliegende Ende der Feststell schraube 22 ragt in die Längsnut 21 hinein und legt sich gegen den Grund dieser Nut an. Das äußere Ende der in das Auge 23 eingeschraubten Feststellschraube 22 liegt bündig oder nahezu bündig mit der Außenfläche des Ausstellers 14 an einer Stelle des Ausstellers, die bei eingefahrenem Luftleitprofil 13 innerhalb des Führungskanals 15 verschwindet, wie dies in Fig. 4 mit ausgezogenen Linien dargestellt ist. Wenn das Luftleitprofil 13 eingefahren ist, sind, wie die Fig. 4 erkennen läßt, weder die Schrauben 19 noch die Feststellschraube 22 zugänglich. Die Schrauben sind nicht nur gegen Witterungseinflüsse geschützt, sondern sie können auch bei mit eingefahrenem Heckspoiler abgestelltem Fahrzeug nicht unbefugt gelöst werden. Daneben wird ein unbeabsichtigtes Lösen der Feststellschraube 22 dadurch sofort kenntlich, daß das äußere Ende dieser Schraube über die Mantelfläche des Ausstellers 14 vorsteht und der Aussteller 14 nicht mehr vollständig in den Führungsblock 16 eingefahren werden kann. Eine Querwand 24 des rohrförmigen Ausstellers 14 verhindert, daß Wasser oder Schmutz über den Aussteller 14 in das Wageninnere gelangen.

Der Führungsblock 16 besteht aus zwei im wesentlichen spiegelsymmetrischen Halbschalen 26 und 27, die über Schrauben 28 miteinander verbunden sind. Die Halbschalen 26, 27 tragen an den den Führungskanal 15 begrenzenden Innenflächen Stege 29, wodurch die Reibungsfläche zwischen Aussteller 14 und Führungsblock 16 vermindert wird. In die vorzugsweise aus Kunststoff bestehenden Schalen 26, 27 ist jeweils eine Gewindebuchse 30 eingeformt. Der Führungsblock 16 wird bei der veranschaulichten Ausführungsform von unten gegen ein geeignetes Karosserieteil, beispielsweise die Heckklappe 31 des Kraftfahrzeugs 10 in Fig. 1, angesetzt, während von außen eine Befestigungsplatte 32 aufgelegt wird. Schrauben 33, die in die Gewindebuchsen 30 eingreifen, verbinden die Befestigungsplatte 32 mit dem Führungsblock 16. Dabei wird das Karosserieblech, beispielsweise der Heckklappe 31, zwischen dem Führungsblock 16 und der Befestigungsplatte 32 eingespannt. An der dem Luftleitprofil 13 zugewendeten Austrittsstelle des Ausstellers 14 aus dem Führungsblock 16 ist eine mit der Befestigungsplatte 32 verklipste Ringdichtung 34 angeordnet. Die von dem Aussteller 14 durchsetzte Öffnung 35 der Ringdichtung 34 ist in Axialrichtung im wesentlichen als Fortsetzung des kreisbogenförmigen Führungskanals 15 ausgebildet.

Die Halbschalen 26, 27 sind mit einer Aufnahme 36 für eine Endschalter 37 versehen, der einen in den Führungskanal 15 hineinragenden Taster 38 aufweist. Der Taster 38 wirkt mit Vertiefungen oder Ausnehmungen 39, 40 zusammen, die in dem dem Taster zugewendeten Bereich des Ausstellers 14 ausgebildet sind. Befindet sich das Luftleitprofil 13 in einer Zwischenstellung, wird der Taster 38 in Fig. 4 nach oben gedrückt. Erreicht der Aussteller 14 die eine oder die andere Endposition, fällt der Taster 38 in die Ausnehmung 39 bzw. 40 ein, wodurch ein elektrisches Signal erzeugt wird, das erkennen läßt, daß das Luftleitprofil 13 die betreffende Endposition einnimmt.

Die beiden Führungsblöcke 16 sind über die die Halbschalen 26, 27 miteinander verbindenden Schrauben 28 an den beiden seitlichen Enden einer gemeinsamen Grundplatte 42 befestigt (Fig. 2). Die Grundplatte 42 trägt ferner in ihrem mittleren Bereich eine dem gemeinsamen Antrieb der beiden Aussteller dienende Antriebseinheit 43, die bei der veranschaulichten Ausführungsform aus einem in seiner Drehrichtung umsteuerbaren Elektromotor 44 und einem daran angeflanschten Untersetzungsgetriebe 45 besteht. Die Abtriebswelle des Untersetzungsgetriebes 45 trägt ein (nicht veranschaulichtes) Antriebsritzel, das ähnlich wie bei einem Schiebedachantrieb im Bereich eines Ausschnittes 46 der Grundplatte 42 mit zwei als Gewindekabel ausgebildeten drucksteifen Antriebskabeln 47 in Kämmeingriff steht. Von diesen Antriebskabeln ist nur das eine teilweise in Fig. 4 veranschaulicht. Die Antriebskabel 47 sind jeweils in einem Führungsrohr 48 bzw. 49 verlegt, das sich von dem Antriebsritzel der Antriebseinheit 43 zu dem betreffenden Führungsblock 16 erstreckt. Die Führungsrohre 48, 49 sind an ihrem führungsblockseitigen Ende mit radial vorspringenden Flanschen 50 versehen, die in Nuten 51 der Halbschalen 26, 27 eingelegt sind (Fig. 4). Die von der Antriebseinheit 43 abliegenden Enden 52 der Antriebskabel 47 sind jeweils in einer in dem betreffenden Führungsblock 16 ausgebildeten, kreisbogenförmigen Führungsbahn 53 verschiebbar geführt, deren Krümmungsmittelpunkt mit dem Krümmungsmittelpunkt des Ausstellers 14 und des Führungskanals 15 zusammenfällt. Das Antriebskabelende 52 ist mit dem Aussteller 14 über einen Mitnehmerstift 54 verbunden. Der Mitnehmerstift 54 ist in ein nach außen vorspringendes Auge 55 des Ausstellers 14 eingesetzt, das in den Endpositionen des Luftleitprofils 13 an Anschlägen 56 bzw. 57 der Halbschalen 26, 27 anstößt. Dadurch wird die Verstellbewegung des Ausstellers 14 gegenüber dem Führungsblock 16 begrenzt.

Die der Antriebseinheit 43 zugewendeten Enden der Führungsrohre 48, 49 sind zwischen der Grundplatte 42 und einer Halteplatte 58 festgelegt, die für diesen Zweck mit entsprechenden Prägungen versehen sind. Die Halteplatte 58 wird an der Grundplatte 42 unter Zwischenfügen einer Führungsplatte 59 mittels Schrauben 60 festgehalten, die zugleich der Befestigung der Antriebseinheit 43 an der Grundplatte 42 dienen. Prägungen 61, 62 in der Grundplatte 42 bzw. der Halteplatte 58 bilden Führungen für die auslaufseitigen Enden der Antriebskabel 47.

Beim Einschalten des Elektromotors 44 werden die Antriebskabel 47 gemeinsam verstellt, wobei die Aussteller 14 über die Mitnehmerstifte 54 mitgenommen werden. Die Aussteller 14 werden dadurch in dem Führungskanal 15 des betreffenden Führungsblockes 16 verschoben. Das auf den Ausstellern 14 befestigte Luftleitprofil 13 wird ausgefahren oder eingefahren. Wenn die betreffende Endposition erreicht ist, fällt der unter Federvorspannung stehende Taster 38 des Endschalters 37 in die Ausnehmung 39 oder 40 ein. Auf Grund des dadurch vom Endschalter 37 abgegebenen Signals wird der Motor 44 stillgesetzt.

Die erläuterte Vorrichtung läßt sich als kompakte, vormontierte Einheit aufbauen. Der Einbau in das Kraftfahrzeug 10 erfordert infolgedessen nur wenige Handgriffe.

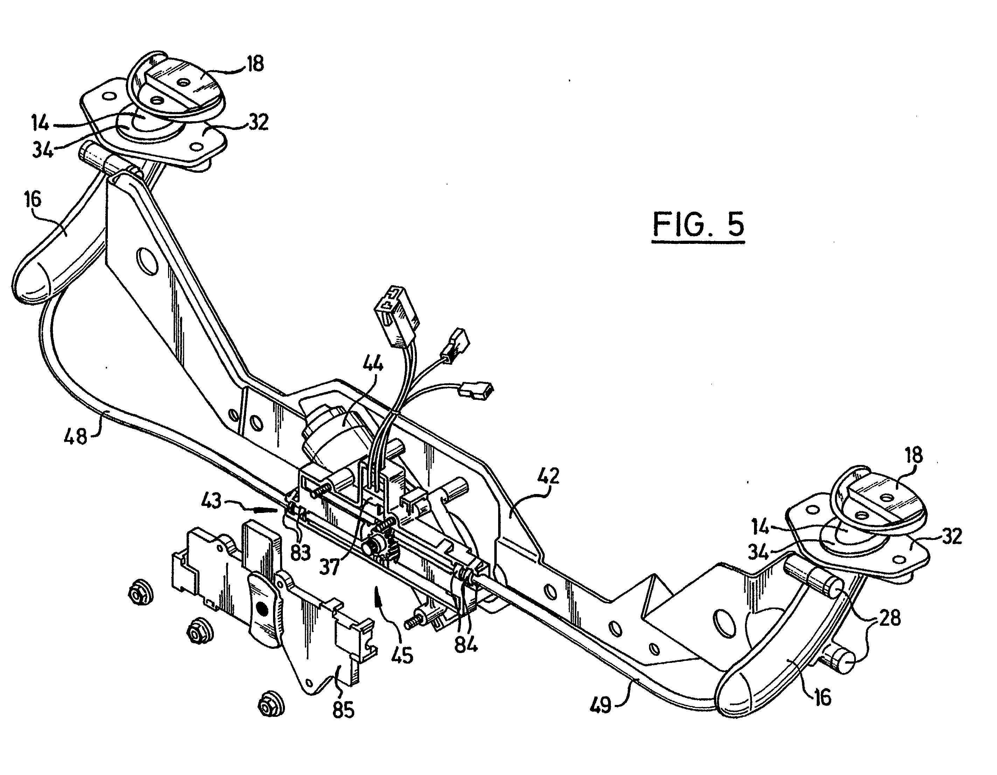

Die in den Figuren 5 bis 7 veranschaulichte abgewandelte Ausführungsform entspricht weitgehend der Anordnung nach den Figuren 1 bis 4. Entsprechende Bauteile sind infolgedessen mit gleichen Bezugszeichen versehen, und nur die Abweichungen von der Ausführungsform gemäß den Figuren 1 bis 4 sind näher erläutert.

Während bei der oben beschriebenen Ausführungsform die Antriebskabel 47 als Gewindekabel ausgebildet sind, ist die Ausführungsform nach dem Fig. 5 bis 7 mit Antriebskabeln 47 in Form von Drahtseilen ausgestattet, deren vom Aussteller 14 abliegendes Ende 65 mit einer Zahnstange 66 verbunden ist. Zur Ankopplung der Antriebskabel 47 an die Zahnstangen 66 weisen die Antriebskabel im Bereich ihres Endes 65 radial vorspringende Abschnitte 67 auf, die sich in entsprechende Ausnehmungen 68 der Zahnstangen 66 einlegen. Die Zahnstangen 66 sind jeweils in einem Führungskanal 69 eines das Untersetzungsgetriebe 45 aufnehmenden Getriebegehäuses 70 längsverschiebbar geführt. Die beidseitigen Längsenden 71, 72 bilden zusammen mit den Endwänden 73, 74 der Führungskanäle 69 Anschläge zur Begrenzung der Verstellbewegung des Luftleitprofils 13. Durch die Verlegung dieser Anschläge in das Getriebegehäuse wird bewirkt, daß Anschlagkräfte nicht auf das Antriebskabel 47 und die Verstellmechanik des Luftleitprofils 13 übertragen werden.

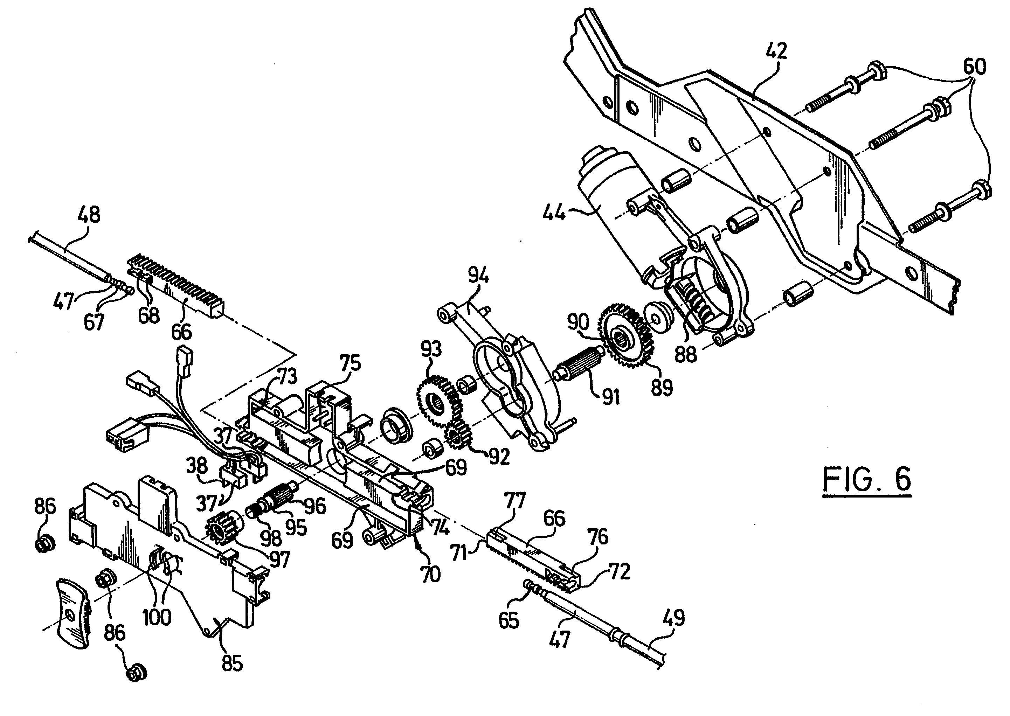

Abweichend von der Ausführungsform gemäß den Figuren 1 bis 4 sind ferner zwei Endschalter 37, 37' vorgesehen, und diese Endschalter sind zum besseren Schutz gegen Umwelteinflüsse, insbesondere Staub und Wasser, ebenfalls in das Getriebegehäuse 70 verlegt. Die Endschalter 37, 37' sitzen dabei in einer Gehäusekammer 75 und ragen mit ihrem Taster 38 in den Raum des in Fig. 6 oberen der beiden parallelen Führungskanäle 69 hinein. Der Taster 38 des Endschalters 37 legt sich in eine Ausnehmung 76 der zugehörigen Zahnstange 66 ein, wenn sich das Luftleitprofil 13 in seiner eingefahrenen Stellung befindet. Erreicht dagegen das Luftleitprofil 13 seine ausgefahrene Stellung, fällt der Taster 38 des Endschalters 37' in eine weitere Ausnehmung 77 der betreffenden Zahnstange 66 ein. In den Zwischenstellungen des Luftleitprofils 13 werden die Taster 38 beider Endschalter 37 und 37' von der Zahnstange 66 nach oben gedrückt.

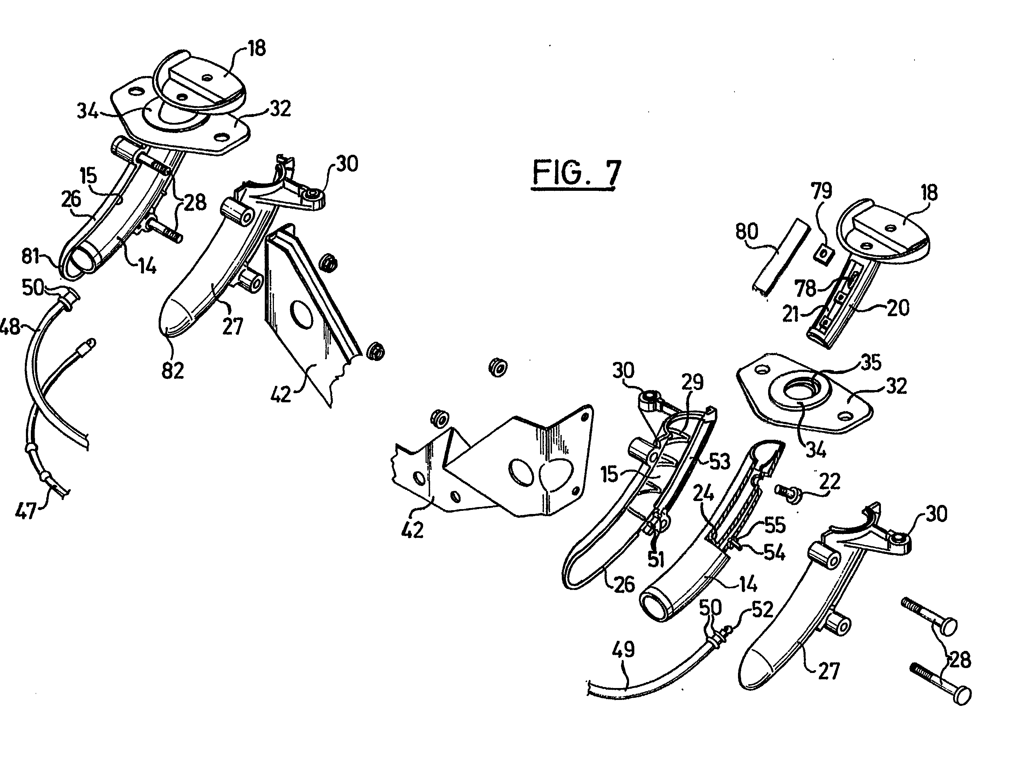

Die Feststellschraube 22 greift durch ein Langloch 78 (Fig. 7) des Ansatzes 20, und sie ist in eine Mutter 79 eingeschraubt, die verdrehsicher in der Längsnut 21 des Ansatzes 20 geführt ist. Auf diese Weise läßt sich die Eintauchtiefe des Ansatzes 20 in den zugehörigen Aussteller 14 justieren. Die Längsnut 21 wird mittels eines Abdeckstreifens 80 abgedeckt.

Die Halbschalen 26, 27 der Führungsblöcke 16 bilden mit ihren von der Befestigungsplatte 32 abliegenden Enden 81 bzw. 82 Verkleidungen für das untenliegende Ende des jeweiligen Führungskanals 15, wodurch auf vorteilhafte und einfache Weise das Eindringen von Staub in die Führungskanäle 15 von diesem Ende aus verhindert wird.

Im Falle der Ausführungsform gemäß den Figuren 5 bis 7 entfallen die Halteplatte 58 und die Führungsplatte 59. Die von den Führungsblöcken 16 abliegenden Enden 48, 49 sind in dem Getriebegehäuse 70 festgelegt, wobei radial vorspringende Flansche 83 der Führungsrohre 48, 49 in entsprechende Ausnehmungen 84 des Getriebegehäuses 70 und/oder eines Gehäusedeckels 85 eingreifen. Über die Schrauben 60 sind der Elektromotor 44, das Getriebegehäuse 70 und der Gehäusedeckel 85 mit der Grundplatte 42 verbunden. Auf die Schrauben 60 sind Muttern 86 aufgeschraubt.

In Fig. 6 sind Einzelheiten der Antriebseinheit 43 veranschaulicht. Wie dargestellt, weist der Elektromotor 44 eine Schneckenwelle 88 auf, die mit einem Schnecken rad 89 in Eingriff steht. Das Schneckenrad 89 ist über eine Kerbverzahnung 90 mit einer kerbverzahnten Zwischenwelle 91 drehfest verbunden. Die Zwischenwelle 91 steht ferner in drehfester Verbindung mit einem kerbverzahnten Stirnrad 92, das seinerseits mit einem größeren Stirnrad 93 kämmt. In dem Getriebegehäuse 70 und einem Gehäuseteil 94 ist eine kerbverzahnte Welle 95 axial begrenzt verschiebbar gelagert. Das Stirnrad 93 ist über eine Kerbverzahnung 96 mit der Welle 95 drehfest verbunden, wenn sich die Welle 95 in ihrer Normalstellung befindet, in welcher sie in Fig. 6 nach rechts geschoben ist. Ein mit den Zahnstangen 66 ständig in Eingriff stehendes Antriebsritzel 97 ist mit der Welle 95 über die Kerbverzahnung 96 gleichfalls drehfest, aber axial verschiebbar verbunden. Die Welle 95 ragt mit ihrem kerbverzahnten, in Fig. 6 linken Ende 98 durch den Gehäusedeckel 85 hindurch. Über das kerbverzahnte Ende 98 ist die Welle 95 mit einem Notbetätigungsknebel 99 dreh- und verschiebefest verbunden.

In der Normalstellung der Welle 95 legen sich an dem Gehäusedeckel 85 sitzende Schnapphaken 100 hinter einen (in Fig. 6 nicht sichtbaren) Ringwulst des Knebels 99. Die Welle 95 steht in dieser Stellung mit dem Stirnrad 93 in Eingriff. Drehmoment wird vom Motor 44 über das Untersetzungsgetriebe 45 auf das Antriebsritzel 97 und die Zahnstangen 66 übertragen. Für eine manuelle Notbetätigung, beispielsweise bei Ausfall der Bordspannung, werden der Knebel 99 und mit ihm die Welle 95 in Fig.

6 nach links gezogen, wobei die Schnapphaken 100 den Knebel 99 freigeben und die Kerbverzahnung 96 außer Eingriff mit dem Stirnrad 93 kommt. Dadurch werden der Motor 44 und das Untersetzungsgetriebe 45 von der Welle 95 abgekoppelt. Das Luftleitprofil 13 läßt sich durch Drehen des Knebels 99 verstellen.

## Patentansprüche

1. Vorrichtung zum Leiten der Windströmung an Fahrzeugen, insbesondere Heckspoiler, mit einem Luftleitprofil, das gegenüber der Fahrzeugkarosserie zwischen einer eingefahrenen Stellung und einer ausgefahrenen Stellung verstellbar ist, in welcher das Luftleitprofil als Ganzes in Abstand von der Fahrzeugkarosserie steht und gegenüber seiner Ausrichtung in eingefahrener Stellung geneigt ist, **dadurch gekennzeichnet,** daß das Luftleitprofil (13) von mindestens einem mit ihm starr verbundenen kreisbogenförmigen Aussteller (14) getragen ist, der in einem entsprechend kreisbogenförmigen Führungskanal (15) eines mit Bezug auf die Karosserie feststehend angeordneten Führungsblockes (16) verschiebbar geführt ist.

2. Vorrichtung nach Anspruch 1, dadurch gekennzeichnet, daß der Aussteller (14) mit einem drucksteifen Antriebskabel (47) in Antriebsverbindung steht.

3. Vorrichtung nach Anspruch 2, dadurch gekennzeichnet, daß das Antriebskabel (47) über mindestens einen Teil seiner Längsabmessung in einem Führungsrohr (48, 49) verlegt ist.

4. Vorrichtung nach Anspruch 2 oder 3, dadurch gekennzeichnet, daß das mit dem Aussteller (14) in Antriebsverbindung stehende Ende (52) des Antriebskabels (47) in einer in dem Führungsblock (16) ausgebildeten kreisbogenförmigen Führungsbahn (53) verschiebbar geführt ist, deren Krümmungsmittelpunkt mit dem Krümmungsmittelpunkt des Ausstellers (14) und des Führungskanals (15) zusammenfällt.

5. Vorrichtung nach einem der Ansprüche 2 bis 4, dadurch gekennzeichnet, daß das Antriebskabel (47) als Drahtseil ausgebildet ist, dessen von dem Aussteller (14) abliegendes Ende (65) mit einer Zahnstange (66) verbunden ist, die mit einem Antriebsritzel (97) einer Antriebseinheit (43) kämmt.

6. Vorrichtung nach einem der vorhergehenden Ansprüche, dadurch gekennzeichnet, daß der Führungskanal (15) von Stegen (29) des Führungsblockes (16) begrenzt ist.

7. Vorrichtung nach einem der vorhergehenden Ansprüche, dadurch gekennzeichnet, daß der Führungsblock (16) von zwei Halbschalen (26,27) gebildet ist.

8. Vorrichtung nach einem der vorhergehenden Ansprüche, dadurch gekennzeichnet, daß an der dem Luftleitprofil (13) zugewendeten Austrittsstelle des Ausstellers (14) aus dem Führungsblock (16) eine Ringdichtung (34) angeordnet ist.

9. Vorrichtung nach Anspruch 8, dadurch gekennzeichnet, daß die von dem Aussteller (14) durchsetzte Öffnung (35) der Ringdichtung (34) in Axialrichtung im wesentlichen eine Fortsetzung des kreisbogenförmigen Führungskanals (15) bildet.

10. Vorrichtung nach einem der vorhergehenden Ansprüche, dadurch gekennzeichnet, daß der Aussteller (14) rohrförmig ausgebildet ist.

11. Vorrichtung nach einem der vorhergehenden Ansprüche, dadurch gekennzeichnet, daß das Luftleitprofil (13) mit dem Aussteller (14) über eine an der Unterseite des Luftleitprofils anliegende Anschraubplatte (18) verbunden ist, die einen Ansatz (20) trägt, der in das dem Luftleitprofil zugewendete Ende des Ausstellers hineinragt und dort mittels einer Feststellschraube (22) gehalten ist, die in den Aussteller an einer bei eingefahrenem Luftleitprofil innerhalb des Führungskanals (15) verschwindenden Stelle eingeschraubt ist.

12. Vorrichtung nach Anspruch 11, dadurch gekennzeichnet, daß das äußere Ende der eingeschraubten Feststellschraube (22) bündig oder nahezu bündig mit der Außenfläche des Ausstellers (14) liegt.

13. Vorrichtung nach einem der Ansprüche 5 bis 12, dadurch gekennzeichnet, daß die Antriebseinheit (43) einen Elektromotor (44) aufweist und das Antriebsritzel (97) von dem Elektromotor (44) über ein in einem Getriebegehäuse (70, 85, 94) untergebrachtes Untersetzungsgetriebe (45) angetrieben ist.

14. Vorrichtung nach Ansprüchen 5 und 13, dadurch gekennzeichnet, daß die Zahnstange (66) in einem Führungskanal (69) des Getriebegehäuses verschiebbar geführt ist.

15. Vorrichtung nach Anspruch 14, dadurch gekennzeichnet, daß die Zahnstange (66) zusammen mit dem Getriebegehäuse Anschläge (71 bis 74) zur Begrenzung der Verstellbewegung des Luftleitprofils (13) bildet.

16. Vorrichtung nach einem der vorhergehenden Ansprüche, gekennzeichnet durch mindestens einen in Abhängigkeit von der Verstellbewegung des Luftleitprofils (13) betätigten Endschalter (37, 37') zur Erzeugung eines Signals, das erkennen läßt, ob sich das Luftleitprofil (13) in einer seiner Endstellung (eingefahrene oder ausgefahrene Stellung) oder in einer Zwischenstellung befindet.

17. Vorrichtung nach Anspruch 14 oder 15 und Anspruch 16, dadurch gekennzeichnet, daß der mindestens eine Endschalter (37, 37') in dem Getriebegehäuse (70, 85, 94) untergebracht ist und einen in den Führungskanal (69) hineinragenden Taster (38) aufweist, der in den den Endstellungen des Luftleitprofils (13) entsprechenden Stellungen der Zahnstange (66) in eine Ausnehmung (76, 77) der Zahnstange einfällt.

18. Vorrichtung nach einem der vorhergehenden Ansprüche, dadurch gekennzeichnet, daß das Luftleitprofil (13) auf mindestens zwei parallel ausgerichteten Ausstellern (14) abgestützt ist, die jeweils in einem eigenen Führungsblock (16) geführt sind.

19. Vorrichtung nach Anspruch 18, dadurch gekennzeichnet, daß die Führungsblöcke (16) an einer gemeinsamen Grundplatte (42) befestigt sind.

20. Vorrichtung nach einem der vorhergehenden Ansprüche, dadurch gekennzeichnet, daß eine dem gemeinsamen Antrieb zweier Aussteller (14) dienende Antriebseinheit (43) vorgesehen ist.

21. Vorrichtung nach Ansprüchen 19 und 20, dadurch gekennzeichnet, daß die Antriebseinheit (43) gleichfalls an der Grundplatte (42) angebracht ist.

22. Vorrichtung nach Anspruch 13, dadurch gekennzeichnet, daß der Antriebseinheit (43) eine Notbetätigungseinrichtung (95, 99) zum Verstellen des Luftleitprofils (13) von Hand unter Abkopplung des Elektromotors (44) und des Untersetzungsgetriebes (45) zugeordnet ist.

23. Vorrichtung nach Anspruch 22, dadurch gekennzeichnet, daß das Untersetzungsgetriebe (45) eine von Hand drehbare und axial verschiebbare Antriebswelle (95) aufweist, die mit einem Antriebsritzel (97) für die Antriebskabel (47) in ständiger Antriebsverbindung steht und die durch Axialverschiebung wahlweise in oder außer Eingriff mit der Ausgangsseite (Stirnrad 93) des Untersetzungsgetriebes (45) gebracht werden kann.

**Claims**

1. A stream-lining device for vehicles, particularly a rear spoiler, having an air-deflecting profile which is adjustable relative to the vehicle body between a retracted position and a raised position in which the the air-deflecting profile is spaced in its entirety from the vehicle body and inclined relative to its alignment when in its retracted position, characterised in that the air-deflecting profile (13) is carried by at least one arcuate adjusting member (14) which is rigidly connected thereto and which is displaceably guided in a correspondingly arcuate guide channel (15) of a guide block (16) fixedly disposed relative to the vehicle body.

2. A device as claimed in claim 1, characterised in that the adjusting member (14) is in driving connection with a non-axially compressible drive cable (47).

3. A device as claimed in claim 2, characterised in that the drive cable (47) is laid over at least a portion of its longitudinal dimension in a guide tube (48, 49).

4. A device as claimed in claim 2 or 3, characterised in that that end (52) of the drive cable (47) which is in driving connection with the adjusting member (14) is displaceably guided in an arcuate guide track (53) which is formed in the guide block (16) and whose centre of curvature coincides with the centre of curvature of the adjusting member (14) and of the guide channel (15).

5. A device as claimed in any one of claims 2 to 4, characterised in that the drive cable (47) is a wire cable whose end (55) remote from the adjusting member (14) is connected to a toothed rack (66) which meshes with a drive pinion (97) of a drive unit (43).

6. A device as claimed in any one of the preceding claims, characterised in that the guide channel (15) is defined by spacers (29) of the guide block (16).

7. A device as claimed in any one of the preceding claims, characterised in that the guide block (16) is formed from two half shells (26, 27).

8. A device as claimed in any one of the preceding claims, characterised in that an annular seal (34) is disposed at the location, facing the air-deflecting profile (13), at which the adjusting member (14) emerges from the guide block (16).

9. A device as claimed in claim 8, characterised in that the opening (35) of the annular seal (34) through which the adjusting member (14) passes substantially forms a continuation of the arcuate guide channel (15) in an axial direction.

10. A device as claimed in any one of the preceding claims, characterised in that the adjusting member (14) is of tubular construction.

11. A device as claimed in any one of the preceding claims, characterised in that the air-deflecting profile (13) is connected to the adjusting member (14) by way of a mounting plate (18) which abuts against the underside of the air-deflecting profile and carries a projection (20) which extends into the end of the adjusting member facing the air-deflecting profile where is it held by means of a setscrew (22) which is screwed into the adjusting member at a location which disappears within the guide channel (15) when the air-deflecting profile is retracted.

12. A device as claimed in claim 11, characterised in that the outer end of the screwed-in setscrew (22) is flush, or substantially flush, with the outer surface of the adjusting member (14).

13. A device as claimed in any one of claim 5 to 12, characterised in that the drive unit (43) has an electric motor (44), and the drive pinion (97) is driven by the electric motor (44) by way of a reduction gear (45) accommodated in a transmission housing (70, 85, 94).

14. A device as claimed in claims 5 and 13, characterised in that the toothed rack (66) is displaceably guided in a guide channel (69) of the transmission housing.

15. A device as claimed in claim 14, characterised in that the toothed rack (66), together with the transmission housing, forms stops (71 to 74) for limiting the displacement movement of the air-deflecting profile (13).

16. A device as claimed in any one of the preceding claims, characterised by at least one limit switch (37, 37'), actuated in dependence upon the displacement movement of the air-deflecting profile (13), for producing a signal which detects whether the air-deflecting profile (13) is in one of its end positions (retracted or raised) or in an intermediate position.

17. A device as claimed in claim 14 or 15 and claim 16, characterised in that the at least one limit switch (37, 37') is accommodated in the transmission housing (70, 85, 94) and has a feeler (38) which projects into the guide channel (69) and drops into a recess (76, 77) in the toothed rack (66) when the toothed rack is in its positions corresponding to the end positions of the air-deflecting profile (13).

10. A device as claimed in any one of the preceding claims, characterised in that the air-deflecting profile (13) is supported on at least two adjusting members (14) which are aligned parallel to one another and each of which is guided in an individual guide block (16).

19. A device as claimed in claim 18, characterised in that the guide blocks (16) are secured to a common base plate (42).

20. A device as claimed in any one of the preceding claims, characterised in that a drive unit (43) for commonly driving two adjusting members (14) is provided.

21. A device as claimed in claims 19 and 20, characterised in that the drive unit (43) is also mounted on the base plate (42).

22. A device as claimed in claims 13, characterised in that the drive unit (43) has an associated emergency actuating means (95, 99) for manually adjusting the air-deflecting profile (13) with uncoupling of the electric motor (44) and the reduction gear (45).

23. A device as claimed in claims 2 and 22, characterised in that the reduction gear (45) has a manually rotatable and axial displaceable drive shaft (95) which is in permanent driving connection with a drive pinion (97) for the drive cable (47) and which may be brought selectively into or out of engagement with the output side (spur wheel 93) of the reduction gear (45) by axial displacement.

## Revendications

1. Dispositif pour diriger le courant du vent sur des véhicules, notamment un spoiler arrière, comportant un profilé dirigeant l'air, susceptible d'être déplacé, par rapport à la carrosserie du véhicule, entre une position rentrée et une position déployée, dans laquelle le profilé dirigeant l'air se trouve dans son ensemble à distance de la carrosserie du véhicule et est incliné par rapport à son orientation en position rentrée, dispositif caractérisé en ce que le profilé (13) dirigeant l'air est porté par au moins un bras de levage (14) en forme d'arc de cercle, relié rigidement à ce profilé, et qui est guidé de façon à pouvoir coulisser dans une gouttière de guidage (15) en forme correspondante d'arc de cercle, d'un bloc de guidage (16) monté en position fixe par rapport à la carrosserie.

2. Dispositif selon la revendication 1, caractérisé en ce que le bras de levage (14) est en liaison d'entraînement avec un câble d'entraînement (47) rigide envers la pression.

3. Dispositif selon la revendication 2, caractérisé en ce que le câble d'entraînement (47) est posé, sur au moins une partie de sa dimension en longueur, dans un tube de guidage (48, 49).

4. Dispositif selon la revendication 2 ou 3, caractérisé en ce que l'extrémité (52) du câble d'entraînement (47) qui est en liaison d'entraînement avec le bras de levage (14) est guidée de façon à pouvoir coulisser dans une glissière (53) en forme d'arc de cercle, constituée dans le bloc de guidage (16), et dont le centre de courbure coïncide avec le centre de courbure du bras de levage (14) et la gouttière de guidage (15).

5. Dispositif selon l'une des revendications 2 à 4, caractérisé en ce que le câble d'entraînement (47) est constitué sous la forme de câble en fils métalliques, dont l'extrémité (65) située à l'opposé du bras de levage (14) est reliée à une crémaillère (66), qui engrène avec un pignon d'entraînement (97) d'une unité de commande (43).

6. Dispositif selon l'une des revendications précédentes, caractérisé en ce que la gouttière de guidage (15) est délimitée par des traverses (29) du bloc de guidage (16).

7. Dispositif selon l'une des revendications précédentes, caractérisé en ce que le bloc de guidage (16) est formé par deux demi-coquilles (26, 27).

8. Dispositif selon l'une des revendications précédentes, caractérisé en ce que à l'endroit situé en regard du profilé (13) dirigeant l'air, où le bras de levage (14) sort du bloc de guidage (16), est disposée une garniture d'étanchéité annulaire (34).

9. Dispositif selon la revendication 8, caractérisé en ce que l'ouverture (35) de la garniture d'étanchéité annulaire (34) qui est traversée par le bras de levage (14) forme en direction axiale essentiellement une continuation de la gouttière de guidage (15) en forme d'arc de cercle.

10. Dispositif selon l'une des revendications précédentes, caractérisé en ce que le bras de levage (14) est constitué en forme de tube.

11. Dispositif selon l'une des revendications précédentes, caractérisé en ce que le profilé (13) dirigeant l'air est relié au bras de levage (14) par l'intermédiaire d'une plaque à visser (18) s'appliquant contre la face inférieure du profilé dirigeant l'air, et portant un appendice (20) qui pénètre dans l'extrémité du bras de levage située en regard du profilé dirigeant l'air et y est maintenu au moyen d'une vis de fixation (22), qui est vissée dans le bras de projection en un endroit disparaissant, lorsque le profilé dirigeant l'air est en position rentrée, à l'intérieur de la gouttière de guidage (15).

12. Dispositif selon la revendication 11, caractérisé en ce que l'extrémité extérieure de la vis de fixation (22) une fois vissée se situe en affleurement, ou presque en affleurement, avec la surface extérieure du bras de levage (14).

13. Dispositif selon l'une des revendications 5 à 12, caractérisé en ce que l'unité de commande (43) comporte un moteur électrique (44), et le pignon d'entraînement (97) est actionné par ce moteur électrique (44) par l'intermédiaire d'un démultiplicateur (45) logé dans un carter (70, 85, 94) du mécanisme de transmission.

14. Dispositif selon les revendications 5 et 13, caractérisé en ce que la crémaillère (66) est guidée de façon à pouvoir coulisser dans un canal de guidage (69) du carter du mécanisme de transmission.

15. Dispositif selon la revendication 14, caractérisé en ce que la crémaillère (66) forme, conjointement avec le carter du mécanisme de transmission, des butées (71 à 74) servant à limiter le mouvement de déplacement du profilé (13) dirigeant l'air.

16. Dispositif selon l'une des revendications précédentes, caractérisé par au moins un interrupteur de fin de course (37, 37'), actionné en fonction du mouvement de déplacement du profilé (13) dirigeant l'air, pour produire un signal qui permet de se rendre compte si le profilé (13) dirigeant l'air se trouvant dans l'une de ses positions terminales (position rentrée ou position déployée) ou bien dans une position intermédiaire.

17. Dispositif selon la revendication 14 ou 15 et la revendication 16, caractérisé en ce que l'interrupteur de fin de course (37, 37'), dont il est prévu au moins un, est logé dans le carter (70, 85, 94) du mécanisme de transmission et est pourvu d'un palpeur (38) pénétrant dans le canal de guidage (69) et qui, dans les positions de la crémaillère (66) correspondant aux positions terminales du profilé (13) dirigeant l'air, s'engage dans un évidement (76, 77) de la crémaillère.

18. Dispositif selon l'une des revendications précédentes, caractérisé en ce que le profilé (13) dirigeant l'air s'appuie sur au moins deux bras de levage (14) orientés parallèlement, dont chacun est guidé dans un bloc de guidage propre (16).

19. Dispositif selon la revendication 18, caractérisé en ce que les blocs de guidage (16) sont fixés à un plateau de base (42).

20. Dispositif selon l'une des revendications précédentes, caractérisé en ce qu'il est prévu une unité de commande (43) servant à l'entraînement commun de deux bras de levage (14).

21. Dispositif selon les revendications 19 et 20, caractérisé en ce que l'unité de commande (43) est montée également sur le plateau de base (42).

22. Dispositif selon la revendication 13, caractérisé en ce que, à l'unité de commande (43) est associé un dispositif de manœuvre de secours (95, 99) pour déplacer à la main le profilé (13) dirigeant l'air, en désaccouplant le moteur électrique (44) et le démultiplicateur (45).

23. Dispositif selon les revendications 2 et 22, caractérisé en ce que le démultiplicateur (45) comporte un arbre de commande (95) pouvant être soumis à la main à une rotation et à un déplacement en direction axiale, arbre qui est en liaison d'entraînement permanente avec un pignon d'entraînement (97) pour le câble d'entraînement (47) et qui, par déplacement axial, peut être au choix, amené en prise, ou hors de prise, avec le côté sortie (roue dentée cylindrique 93) du démultiplicateur (45).

## FIG. 1

FIG. 2

EP 0 242 681 B1

FIG. 3

FIG. 4

EP 0 242 681 B1

FIG. 5

EP 0 242 681 B1

FIG. 6

EP 0 242 681 B1

FIG. 7